Europäisches Patentamt

European Patent Office

Office européen des brevets

(11) Veröffentlichungsnummer: **0 093 391**
**A2**

## (12) EUROPÄISCHE PATENTANMELDUNG

(21) Anmeldenummer: **83104115.7**

(22) Anmeldetag: **27.04.83**

(51) Int. Cl.³: **B 23 B 47/28**

(30) Priorität: **29.04.82 DE 3215957**

(43) Veröffentlichungstag der Anmeldung:
**09.11.83 Patentblatt 83/45**

(84) Benannte Vertragsstaaten:
**AT BE CH FR GB IT LI NL SE**

(71) Anmelder: **Roth, Günter**
**Spessartstrasse 11**
**D-8752 Sailauf(DE)**

(72) Erfinder: **Roth, Günter**
**Spessartstrasse 11**
**D-8752 Sailauf(DE)**

(54) **Bohrlehre zum Führen eines Werkzeuges/Bohrers.**

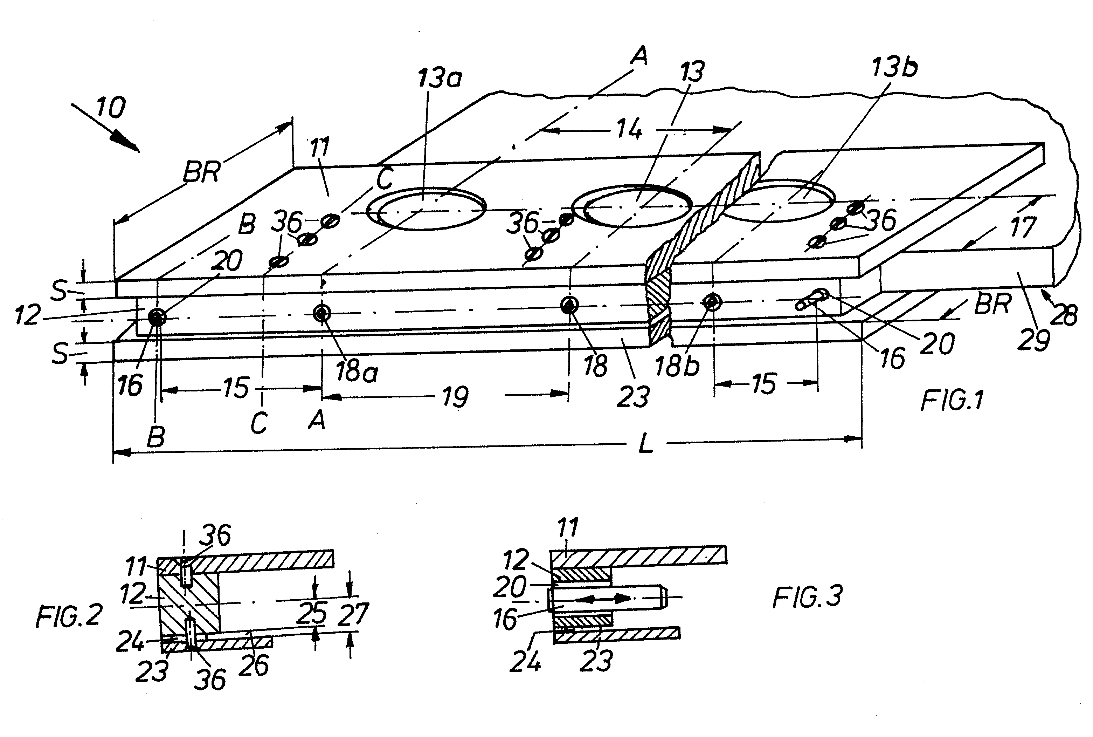

(57) Eine derartige Bohrlehre (10) dient zur Herstellung von Exzentertopfbohrungen (30), Durchgangsbohrungen (31) für Exzenterstifte und Befestigungsbohrungen (37) für Exzenterstifte in Werkstückplatten (29,33). Um zu erreichen, daß in einem ersten Bauteil (29) in einfachster Art und Weise maßgerecht sowohl die Exzenterbohrungen (30) als auch die Durchgangsbohrungen (31) für die Exzenterstifte bei gleichbleibender Lehrenposition und ferner in einer zweiten Lehrenposition an einem dazugehörigen zweiten Bauteil (33) die Befestigungsbohrung (37) für die Exzenterestifte hergestellt werden können, weist die Bohrlehre (10) zwei rechtwinklig zueinander angeordnete Lehrenleisten (11, 12) auf, wobei in der ersten Lehrenleiste (11) Bohrungen (13) zum Fixieren/ Zentrieren eines Exzenterbohrungswerkzeuges und in der zweiten Lehrenleiste (12) Bohrbuchsen (18) für die Durchgangs-/Befestigungsbohrungen (31, 37) vorgesehen sind und Bohrungen (13 ) und Bohrbuchsen (18) mittig in einer Ebene (A-A) zueinander angeordnet sind (Fig. 1).

FIG.1

## Bohrlehre zum Führen eines Werkzeuges/Bohrers

Die vorliegende Erfindung betrifft eine Bohrlehre zum Führen eines Werkzeuges/Bohrers zur Herstellung von Exzenterbohrungen, Durchgangsbohrungen für Exzenterstifte und Befestigunsbohrungen für den Exzenterstift in Werkstückplatten.

Bei der Fertigung von Möbelteilen, wie Seitenteilen, Böden, die später zu einem Korpus zusammengesetzt werden, ist es erforderlich, in diese Möbelteile die obengenannten Bohrungen zum Halten und Befestig en von Exzenter und Exzenterstift vorzusehen.
Bei der Großserienfertigung von Möbelteilen werden diese Bohrungen auf entsprechend großen Maschinen (Bohrwerke) hergestellt. Bei der Anfertigung von Kleinserien sowie der Einzelanfertigung werden bisher diese Bohrungen so hergestellt, daß zunächst ein Anreißen/Markieren der

Bohrungen auf dem entsprechenden Plattenteil erfolgt und dann die Bohrungen von Hand vorgenommen werden. Diese Arbeitsweise ist jedoch insbesondere im Hinblick auf den erforderlichen Zeitaufwand nicht günstig.

Aufgabe der vorliegenden Erfindung ist es deshalb, eine Bohrlehre der eingangs genannten Art zu schaffen, mit der in einem ersten Bauteil bei gleichbleibender erster Lehrenposition in einfachster Art und Weise maßgerecht sowohl die Exzenterbohrungen als auch die Durchgangsbohrungen für die Exzenterstifte und ferner in einer entsprechenden zweiten Lehrenposition am dazugehörigen zweiten Bauteil die Befestigungsbohrung für die Exzenterstifte hergestellt werden können.
Diese Aufgabe wird durch die kennzeichnenden Merkmale des Anspruches 1 gelöst.

Mit der erfindungsgemäßen Bohrlehre wird es in einfachster Art und Weise möglich, die Exzenterbohrungen für die Exzenter herzustellen.

Ferner wird es mit der gleichen Lehre in einfachster Art und Weise möglich und zwar ohne, daß die Position der Lehre verändert zu werden braucht, die Durchgangsbohrungen für die Exzenterstifte herzustellen. Hierbei wird die Lehre zum Bohren dieser beiden Bohrungen (Exzenterbohrung, Durchgangsbohrung) auf das zu bohrende Werkstück (Bodenteil, Mittelteil, Abdeckteil) gelegt wobei die erste Lehrenleiste auf der Werkstückflächenseite und die zweite Lehrenleiste an der einen Werkstückstirnseite bündig anliegen und ferner ein Anschlagstift die Position der Bohrungen gegenüber der anderen Werkstückstirnseite fixiert. In dieser Position wird die Lehre festgespannt und mit einer Handbohrmaschine die Durchgangsbohrungen für die Exzenterstifte in die Werkstückstirnseite gebohrt. Anschließend werden in die Werkstückflächenseite die Exzenterbohrungen gebohrt. Hierbei wird bei gleichbleibender Lehrenpositionen mit einer Oberfräse mittels Anlaufring oder einer Bohrmaschine mit Fräskopf, welcher in die Bohrung der ersten Lehrenleiste eingreift, dann die Exzenterbohrung hergestellt. Durch die gleichbleibende Position der Lehre ist gewährleistet, daß die Exzenterbohrung und die Durchgangsbohrung in einer Ebene und so exakt aufeinander angepaßt sind. Der Abstand der Mitte der Durchgangsbohrung von den Werkstückflächenseiten kann dabei durch entsprechende Anordnung der Durchgangsbohrungen in der zweiten Lehrenleiste fest vorgegeben werden. Bevorzugt an der zweiten Lehrenleiste ist eine Anschlagleiste vorgesehen, mit der die Lehre an der der Werkstückflächenseite in welcher die Exzenterbohrung vorgesehen wird, gegenüberliegenden Werkstückflächenseite fixiert/festgespannt wird. Der Abstand der Durchgangsbohrungen ist dann vorteilhaft durch auswechselbare Scheiben veränderbar.

Zum Bohren der Befestigungsbohrungen für die Exzenterstifte in den Seitenteilen wird dann die Bohrlehre bei entfernter ersten Lehrenleiste entsprechend auf das Seitenteil gelegt und mit Anschlag positioniert und mit einer Handbohrmaschine die Bohrung ausgeführt, so daß Befestigungsbohrung im Seitenteil und Durchgangsbohrung im Bodenteil etc. genau aufeinander abgestimmt sind und die paßgenaue Montage erfolgen kann.

Mit der erfindungsgemäßen Bohrlehre die vorzugsweise für Holzwerkstoffe geeignet ist wird somit in einfachster Art und Weise ein maßgerechtes Bohren von Exzenterbohrungen sowie den dazugehörigen Bohrungen für die Befestigung und den Durchgang der dazugehörigen Exzenterstifte erreichbar.

Weitere vorteilhafte Merkmale der Erfindung ergeben sich aus den Unteransprüchen sowie der nachfolgenden Beschreibung.

In den Zeichnungen veranschaulicht:

Fig. 1    eine Bohrlehre in persektivischer Ansicht

Fig. 2    einen Schnitt längs der Linie C-C in Fig.1

Fig. 3    einen Schnitt längs der Linie B-B in Fig.1

Fig. 4    einen Schnitt längs der Linie A-A in Fig.1

Fig. 5    die Bohrlehre nach Fig.1 in Verbindung mit einem Seitenteil.


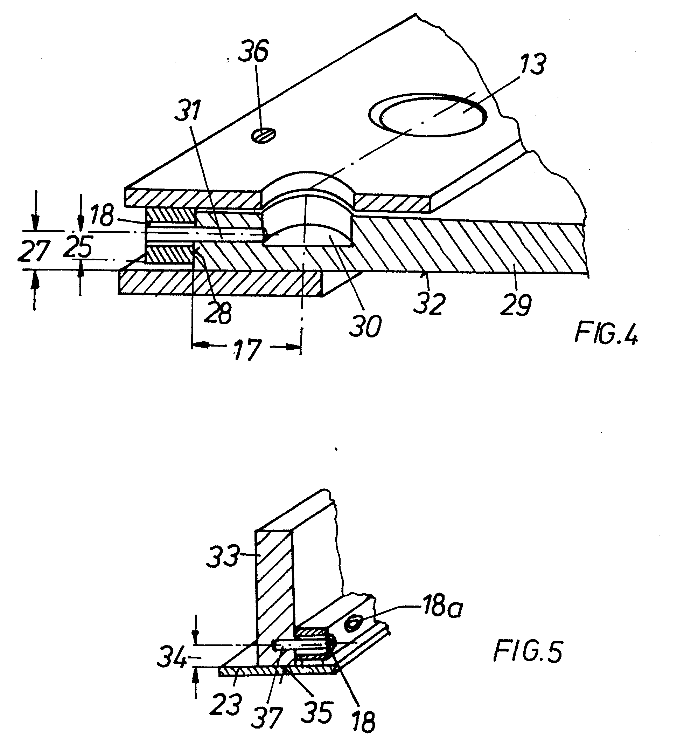

In Fig.1 ist die Bohrlehre zum Führen eines Bohrers zur Herstellung von Bohrungen in Möbelteilen mit 10 bezeichnet. Die Bohrlehre 10 deren Länge ca. 700 mm beträgt weist zwei rechtwinklig zueinander angeordnete Lehrenleisten 11 und 12 auf. In der ersten Lehrenleiste 11 sind Bohrungen 13 zum Fixieren/Zentrieren eines Exzenterbohrungswerkzeuges angeordnet. Die Bohrungen 13 weisen dabei untereinander einen Abstand 14 von 64 mm auf, sowie einen Durchmesser von 50 mm. Die beiden äußeren Bohrungen 13a und 13b weisen einen Abstand 15 zu einem Anschlagstift 16 von 37 mm auf. Der Abstand 17 (s. Fig.1,4) beträgt 33 mm, kann jedoch vorteilhaft auch verstellbar ausgeführt sein, z.B. über unterschiedliche Bohrungen 36. Die zweite Lehrenleiste 12 enthält Bohrbuchsen 18, deren Abstand 19 dem Abstand 14 der Bohrungen 13 entspricht. Ferner liegen Bohrbuchsen 18, deren Abstand 19 dem Abstand 14 der Bohrungen 13 entspricht. Ferner liegen Bohrbuchsen 18 und Bohrungen 13 in der gleichen Ebene A-A. Zusätzlich können an den beiden Anschlagstiften 16 beliebig lange⁺ Distanzstücke eingesteckt werden. Dadurch können die Abstände 14 und 19 beliebig verändert werden und z.B. in einen 32er Raster gebohrt werden. Alle Bohrbuchsen sind bevorzugt als gehärtete Bohrbuchsen aus Stahl ausgebildet und weisen einen Innendurchmesser von 8 mm auf. Die Lehre 10 weist ferner eine Anschlagleiste 23 auf, die parallel zur ersten Lehrenleiste 11 an der zweiten Lehrenleiste 12 befestigt + als Anschlag dienende

ist. Zwischen Anschlagleiste 23 und zweiter Lehrenleiste 12 sind auswechselbare Distanzscheiben 24 (s.Fig.2) befestigt. Je nach Anzahl und Stärke vorzugsweise 1 mm und 0,5 mm der Distanzscheiben 24 und einem Abstand 25 der Bohrbuchsen von der Unterkante 26 von 8 mm können beliebige Abstandsmaße 27 (8 bis 16 mm) in der Stirnfläche 28 der Werkstückplatte 29 (s. auch Fig. 2 und 4) bei unterschiedlichen Werkstückplattendicken (16 - 30 mm) erreicht werden.

Die zweite Lehrenleiste 12 hat vorzugsweise quadratischen Querschnitt (20x20 mm) und ist aus einem Leichtmetallwerkstoff gefertigt. Die Lehrenleiste 11 sowie die Anschlagleiste 23 bestehen bevorzugt aus Kunststoff und weisen eine Stärke "S" von ca. 10 mm auf, eine Länge "L" von ca. 700 mm sowie eine Breite "BR" von ca. 100 mm (Lehrenleiste 11) bzw. 53 mm (Anschlagleiste 23). Es ist selbstverständlich aber auch möglich die Leisten 11 und 23 aus Leichtmetallwerkstoff herzustellen. Die Lehrenleisten 11 und 12 sowie die Anschlagleiste 23 sind durch Schrauben 36 miteinander verbunden.

Wie aus Fig. 1 zu ersehen ist weist die Bohrlehre 10 ein symetrisches, spiegelbildliches Bohrbild auf, so daß beliebige Seiten einer Möbelplatte mit beliebiger Länge mit derselben Lehre gebohrt werden können. Die Lehre wird dabei entweder rechts oder links angeschlagen, wobei dann entweder der eine oder andere Anschlagstift 16 zum Einsatz kommt. In Fig.1 ist der rechte Stift 16 teilweise herausgezogen und nicht im Einsatz. Hierzu sind die Anschlagstifte 16 verschiebbar in den Bohrbuchsen 20 angeordnet (s. auch Fig.3).

Bei Möbelplatten die länger als 700 mm sind,ist die Lehre 10 ebenfalls vorteilhaft einsetzbar. In diesem Fall wird dann eine bereits in die Stirnseite gebohrte Durchgangsbohrung dazu benutzt den Anschlagstift 16 aufzunehmen und die Lehre zu fixieren.

0093391

Wie bereits ausgeführt, können mit der Lehre 10 in einer Position sowohl ein oder mehrere Exzenterbohrungen 30 als auch entsprechend ein oder mehrere Durchgangsbohrungen 31 hergestellt werden. Hierzu wird die Lehre, wie Fig.4 zeigt mit der Anschlagleiste 23 gegen die untere Plattenflächenseite 32 gespannt und dann die Exzenterbohrung 30 gebohrt.

Hierbei ist es einerseits möglich, in die Bohrung 13 zum Fixieren eines Topfbohrers einen Anlaufring einer Oberfräse bzw. einer Bohrmaschine einzusetzen und die Topfbohrung herzustellen. Dabei weist der Anlaufring ebenfalls einen Durchmesser von 50 mm auf, während der Topfbohrer einen Außendurchmesser von 25 mm aufweist, so daß in die Platte eine Exzentertopfbohrung mit einem Durchmesser von 25 mm oder beliebige Durchmesser gebohrt/ gefräst werden kann.

Danach wird die Durchgangsbohrung 31 hergestellt, wobei ein Bohrer durch die Bohrbuchse 18 geführt wird.

Mit der gleichen Lehre 10 ist es möglich in dem zur Werkstückplatte 29 gehörenden Seitenteilen 33 an der entsprechend richtigen Stelle die Befestigungsbohrungen für die Exzenterstifte vorzusehen. Hierzu wird die Lehrenleiste 11 abgeschraubt und die verbleibende Lehrenleiste 12 mit der Anschlagleiste 23 entsprechend Fig. 5 an das Seitenteil 33 angelegt und die Bohrungen 37 vorgenommen, wobei wiederum die Anschlagleiste 23 den Abstand 34 = Abstand 27 (8-16 mm) der Bohrung 37 von der Seitenstirnseite 35 und der Anschalgstift 16 den seitlichen 37 mm Abstand bestimmen.

Ansprüche

1. Bohrlehre zum Führen eines Werkzeuges/Bohrers zur Herstellung von Exzenterbohrungen, Durchgangsbohrungen für Exzenterstifte und Befestigungsbohrungen für Exzenterstifte in Werkstückplatten, dadurch gekennzeichnet, daß die Bohrlehre (1o) zwei rechtwinklig zueinander angeordnete Lehrenleisten (11,12) aufweist, und daß in der ersten Lehrenleiste (11) Bohrungen (13, 13a, 13b) zum Fixieren/Zentrieren eines Exzenterbohrungswerkzeuges und in der zweiten Lehrenleiste (12) Bohrbuchsen (18, 18a, 18b) für die Durchgangsbohrungen/Befestigungsbohrungen vorgesehen sind, so daß Bohrungen (13, 13a, 13b) und Bohrbuchsen (18, 28a,18b) mittig in einer Ebene (A-A) zueinander angeordnet sind.

2. Bohrlehre nach Anspruch 1, dadurch gekennzeichnet, daß Bohrungen (13) und Bohrbuchsen (18) in gleichem Abstand (14, 19) voneinander angeordnet sind.

3. Bohrlehre und Anspruch 1 oder 2, dadurch gekennzeichnet, daß an der zweiten Lehrenleiste (12) eine parallel zur ersten Lehrenleiste (11) verlaufende Anschlagleiste (23) befestigt ist.

4. Bohrlehre nach Anspruch 3, dadurch gekennzeichnet, daß zwischen der zweiten Lehrenleiste (12) und der Anschlagleiste (23) Distanzscheiben (24) auswechselbar angeordnet sind

5. Bohrlehre nach einem der Ansprüche 1 bis 4, dadurch gekennzeichnet, daß in den Leisten (11,12, 23) vorzugsweise in der zweiten Lehrenleiste (12) verschiebbare Anschlagstifte (16) vorgesehen sind.

6. Bohrlehre nach einem der Ansprüche 1 bis 5, dadurch gekennzeichnet, daß Bohrungen (13), Bohrbuchsen (18) sowie Anschlagstifte (16) für einen beidseitigen Anschlag spiegelbildlich in der Bohrlehre angeordnet sind.

FIG.1

FIG.2

FIG.3

0093391

1/2

FIG.4

FIG.5